# EUROPÄISCHE PATENTANMELDUNG

(11) **EP 1 905 308 A2**
(43) Veröffentlichungstag der Anmeldung: **02.04.2008**
(21) Anmeldenummer: 07018168.0
(22) Anmeldetag: 15.09.2007
(51) Int. Cl.: A21C 3/02

(54) **Vorrichtung zur Herstellung eines Teigbandes aus einem Roh-Teigband sowie Set aus Planetenwalzen zum Einsatz in einer derartigen Vorrichtung**

(30) Priorität: 29.09.2006 DE 102006046501
(71) Anmelder: Werner & Pfleiderer Lebensmitteltechnik GmbH, 91550 Dinkelsbühl (DE)
(72) Erfinder: Fiedler, Rudolf, 91731 Langfurth (DE)
(74) Vertreter: Hofmann, Matthias

(57) **Zusammenfassung**

Eine Vorrichtung zur Herstellung eines Teigbandes aus einem Roh-Teigband hat eine Unter-Drückeinrichtung (18) und eine Ober-Drückeinrichtung (19) mit einem zwischenliegenden Bearbeitungszwischenraum für das Teigband. Die Drückeinrichtungen (18, 19) haben jeweils eine Mehrzahl von um ihre Längsachsen (23) jeweils drehantreibbaren Planetenwalzen (22). In Umfangsrichtung sind die Planetenwalzen (22) um eine gemeinsame zentrale Hauptachse (20, 21), die parallel zu den Planeten-Längsachsen (23) verläuft, gleich verteilt. Die Planetenwalzen (22) sind um die Hauptachse (20, 21) gemeinsam drehantreibbar. Jede Planetenwalze (22) hat ein mit dem Teigband in Kontakt kommendes Mittelteil (24) und endseitig hiermit lösbar und drehfest verbundene Wellenstummel (25, 26). Diese sind axial und radial an stirnseitigen Kopfplatten (27, 28) der Drückeinrichtungen (18, 19) gelagert. Die Teigband-Herstellvorrichtung ist einfach zu reinigen. Ein Set aus Planetenwalzen zum Einsatz in der Vorrichtung (1) hat mindestens zwei Planetenwalzen (22), die sich in Dimensions- oder Materialparametern unterscheiden können. Dies vergrößert die Vielseitigkeit der Teigband-Herstellungsvorrichtung.

## Beschreibung

Die Erfindung betrifft eine Vorrichtung zur Herstellung eines Teigbandes aus einem Roh-Teigband nach dem Oberbegriff des Anspruchs 1. Ferner betrifft die Erfindung ein Set aus Planetenwalzen zum Einsatz in einer derartigen Vorrichtung.

Eine Vorrichtung der eingangs genannten Art ist bekannt aus der EP 0 809 438 B1. Die Reinigung einer derartigen Vorrichtung gestaltet sich sehr aufwändig. Insbesondere die Planetenwalzen und ihr benachbarte Bereiche setzen sich mit der Zeit mit Teigresten zu, so dass eine regelmäßige Reinigung zwingend ist. Die aufwändige Reinigungsprozedur führt zu längeren Standzeiten.

Es ist daher eine Aufgabe der vorliegenden Erfindung, eine Vorrichtung der eingangs genannten Art derart weiterzubilden, dass sie einfacher zu reinigen ist.

Diese Aufgabe ist erfindungsgemäß gelöst durch eine Vorrichtung mit den im Kennzeichnungsteil des Anspruchs 1 angegebenen Merkmalen.

Erfindungsgemäß wurde erkannt, dass eine Mehrteiligkeit der Planetenwalzen mit einem Mittelteil und endseitigen, gelagerten Wellenstummeln zur Möglichkeit führt, zur Reinigung der Vorrichtung die Mittelteile der Planetenwalzen von den endseitigen Wellenstummeln zu lösen. Die Mittelteile können dann einfach gereinigt oder gegen gereinigte Mittelteile ausgetauscht werden. Nach Abnahme der Mittelteile sind zudem die Wellenstummel-Bereiche der Vorrichtung und das Innere der Drückeinrichtungen einer Sichtkontrolle und gegebenenfalls weiteren Reinigung zugänglich. Wartungsarbeiten können vom Aufwand her vereinfacht werden. Der Hygienestatus der Teigband-Herstellungsvorrichtung wird optimiert.

Aufnahmen nach Anspruch 2 gewährleisten eine besonders einfache Demontage der Planetenwalzen-Mittelteile.

Aufnahmen nach Anspruch 3 sind besonders einfach aufgebaut.

Montageaufnahmen nach Anspruch 4 schaffen die Möglichkeit, zusätzliche Komponenten ohne größeren Aufwand zu montieren und zu demontieren.

Bei den zusätzlichen Komponenten kann es sich insbesondere um Abstreiferleisten nach Anspruch 5 oder um leerlaufende Abstreiferrollen handeln. Abstreiferleisten führen zu einer effektiven Beseitigung von Teigrückständen auf den Mantelflächen der Planetenwalzen während des Betriebs der Teigband-Herstellungsvorrichtung und verhindern ein Einsacken weicher Teige. Für bestimmte Teigtypen haben sich anstelle von Abstreiferleisten freilaufende Abstreiferrollen bewährt.

Ein Hauptantrieb nach Anspruch 6 ist im Vergleich zum bisher bekannten Antrieb der Drückeinrichtungen um ihre Hauptachsen wesentlich vereinfacht. Freilaufende Wellen und aufwändige, verschleißreiche und insbesondere Teile, die zur indirekten Antriebsübertragung verwendet werden, werden vermieden. Der Hauptantrieb nach Anspruch 6 kann auch in Kombination mit einteiligen Planetenwalzen, also Planetenwalzen, bei denen die Wellenstummel, anders als beim Gegenstand des Anspruchs 1, einstückig am Mittelteil angefahren sind, vorteilhaft verwendet werden.

Ein Hubantrieb nach Anspruch 7 ermöglicht einen Betrieb der Teigband-Herstellungsvorrichtung, bei dem auf eine beim Stand der Technik in der Regel vorgesehene separate Welle zum Einziehen bzw. Übergeben des Roh-Teigbandes bzw. des bereits bearbeiteten Teigbandes verzichtet werden kann. Das schnelle Zusammenführen der Drückeinrichtungen führt zu einem sicheren und kontrollierten Einzug des Roh-Teigbandes ohne unnötige Produktion von Teigband-Ausschuss.

Ein Gehäuse nach Anspruch 8 ermöglicht einerseits durch Anheben des Abdeckabschnitts eine unaufwändige Kontrolle eines Ein- oder Auslaufbereichs der Vorrichtung und andererseits durch Anheben des Revisionsabschnitts eine gute Zugänglichkeit innerer Komponenten der Teigband-Herstellungsvorrichtung. Das Gehäuse von dieser wird durch die Zugangstür nur soweit geöffnet, soweit dies für den jeweiligen Zweck erforderlich ist. Dies spart Aufwand. Eine Zugangstür nach Anspruch 8 kann auch bei einer Teigband-Herstellungsvorrichtung mit anders als im Anspruch 1 angegebenen, also einteiligen Planetenwalzen und auch mit einem anderen als im Anspruch 6 angegebenen Hauptantrieb eingesetzt werden.

Zwei Zugangstüren nach Anspruch 9 erlauben sowohl einlauf- als auch auslaufseitig eine an den jeweiligen Zweck angepasste Zugänglichkeit der Teigband-Herstellungsvorrichtung.

Benachbarte Revisions-Schwenkgelenke nach Anspruch 10 führen zu einer praktisch ungehinderten Zugänglichkeit des Inneren der Teigband-Herstellungsvorrichtung.

Ein in der Zugangsposition arretierbarer Abdeckabschnitt nach Anspruch 11 verhindert, dass der Abdeckabschnitt unerwünscht in die Abdeck- bzw. Betriebsposition zurückfällt.

Ein Set nach Anspruch 12 vergrößert die Vielseitigkeit der Teigband-Herstellungsvorrichtung. Es besteht die Möglichkeit, auf unterschiedliche Teige verschiedener Konsistenzen mit unterschiedlichen adhäsiven oder kohäsiven Werkstoffen der Planetenwalzen bearbeitend einzuwirken.

Durch ein Set nach Anspruch 13 ist es möglich, dem Teigband je nach Anforderung eine spezielle Form zu geben. Die Planetenwalzen können z. B. ballig oder wellig oder auch mit glatter, gerändelter oder anderweitig perforierter oder veredelter Oberfläche ausgeführt sein. Auch Oberflächenformen der Mantelflächen von Planetenwalzen sind möglich, die im Längsschnitt oder im Querschnitt vieleckig sind, zum Beispiel im Querschnitt 8-, 10- oder 15-eckig.

Beispiele für sich nach Anspruch 14 unterscheidende Planetenwalzen sind Kunststoffwalzen, Edelstahlwalzen, Teflonwalzen. Diese Walzen können je nach den Anforderungen, die die Teigbearbeitung an die Vorrichtung stellt, im Wechsel eingesetzt werden.

Ein Ausführungsbeispiel der Erfindung wird nachfolgend anhand der Zeichnung näher erläutert. In dieser zeigen:
- Fig. 1: eine perspektivische Ansicht einer Teigband-Herstellungsvorrichtung mit zwei einen Revisionsabschnitt und einen Abdeckabschnitt umfassenden Zugangstüren, von denen eine vollständig sichtbar ist, wobei der Revisionsabschnitt in einer Schließstellung und der Abdeckabschnitt in einer Abdeckstellung vorliegen;
- Fig. 2: die Vorrichtung nach Fig. 1, wobei der sichtbare Abdeckschnitt in eine angehobene Zugangsposition verschwenkt ist;
- Fig. 3: die Vorrichtung nach Fig. 1, bei der der Revisionsabschnitt der vollständig sichtbaren Zugangstür in eine Revisionsposition verschwenkt ist;
- Fig. 4: die Vorrichtung nach Fig. 1, bei der die Revisionsabschnitte beider Zugangstüren in die Revisionsposition verschwenkt sind;
- Fig. 5: perspektivisch die Vorrichtung nach Fig. 1 mit abgenommenen Gehäuseteilen;

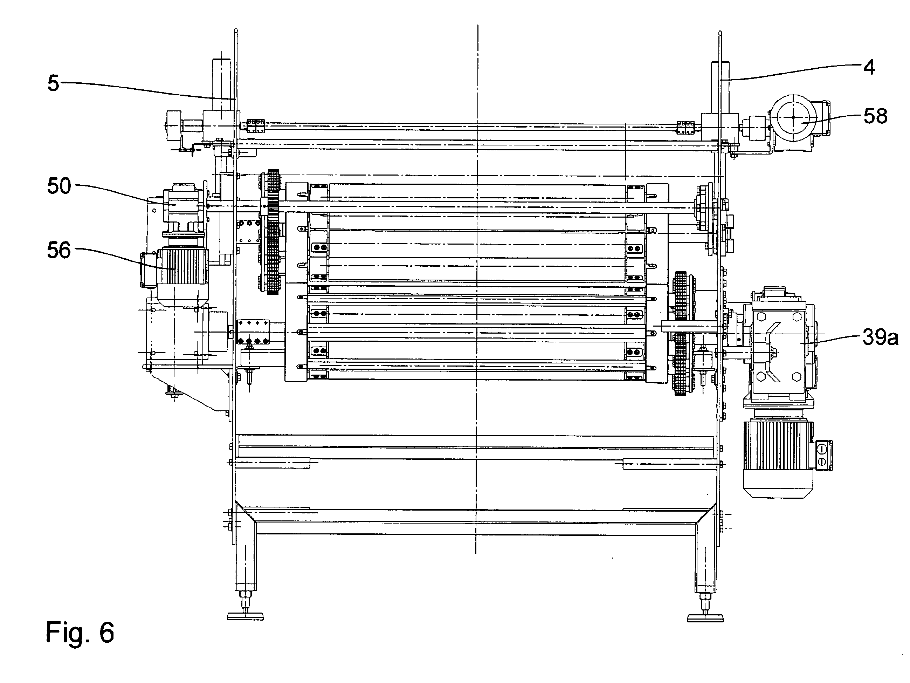

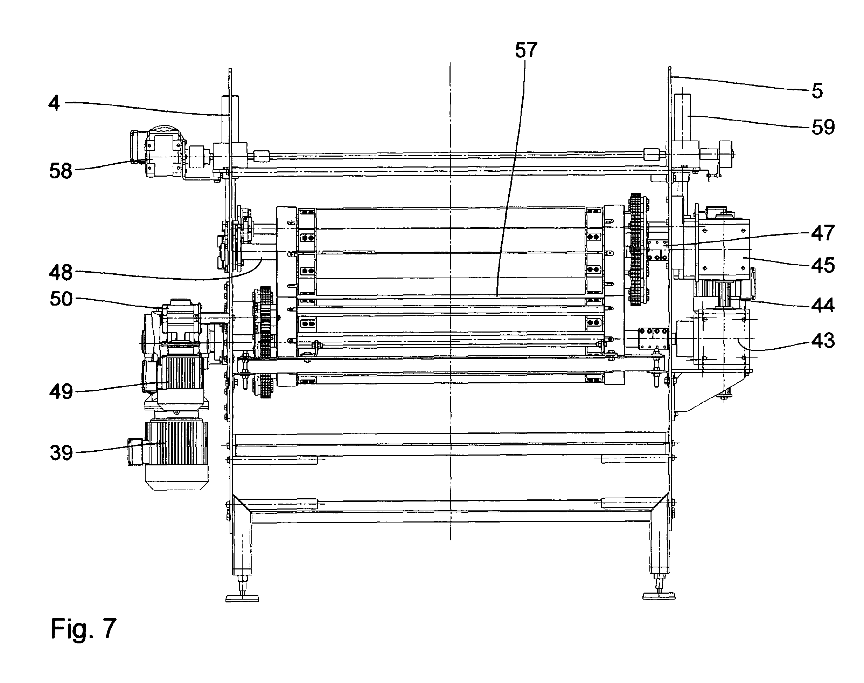

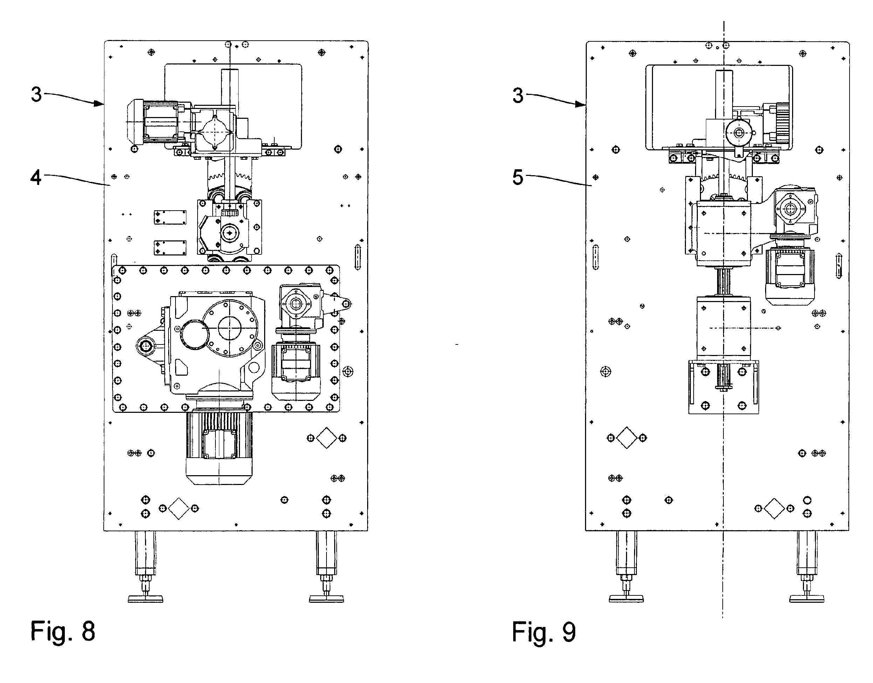

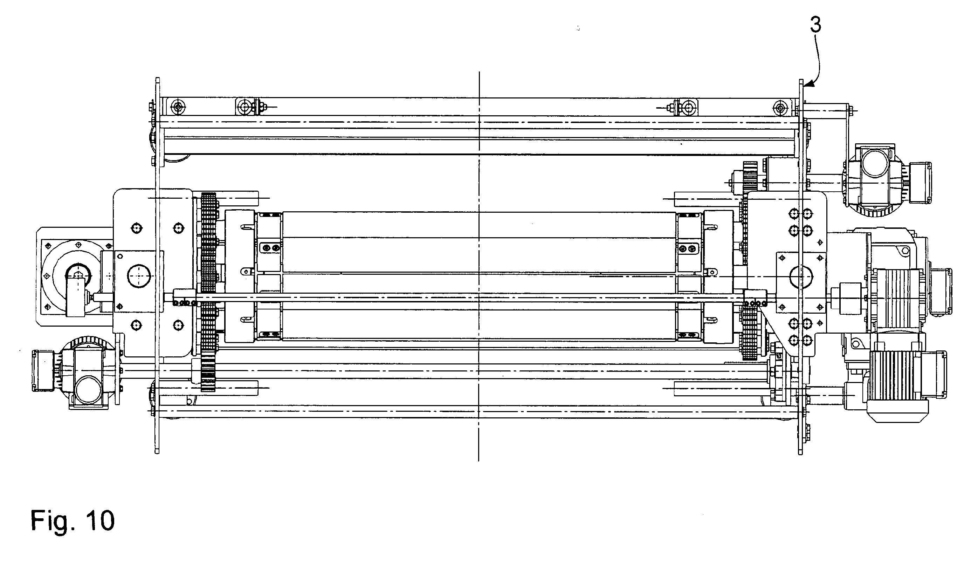

- Fig. 6 bis 10: Ansichten der Vorrichtung von vorne, von hinten, von rechts, von links und von oben;
- Fig. 11: vergrößert ein Druckmodul der Vorrichtung nach Fig. 1 mit einer Ober-Drückeinrichtung und einer Unter-Drückeinrichtung;
- Fig. 12: eine angetriebene Kopfplatte einer Drückeinrichtung des Druckmoduls nach Fig. 11 im Axialschnitt; und
- Fig. 13: eine nicht angetriebene Kopfplatte einer Drückeinrichtung des Druckmoduls nach Fig. 11 im Axialschnitt.

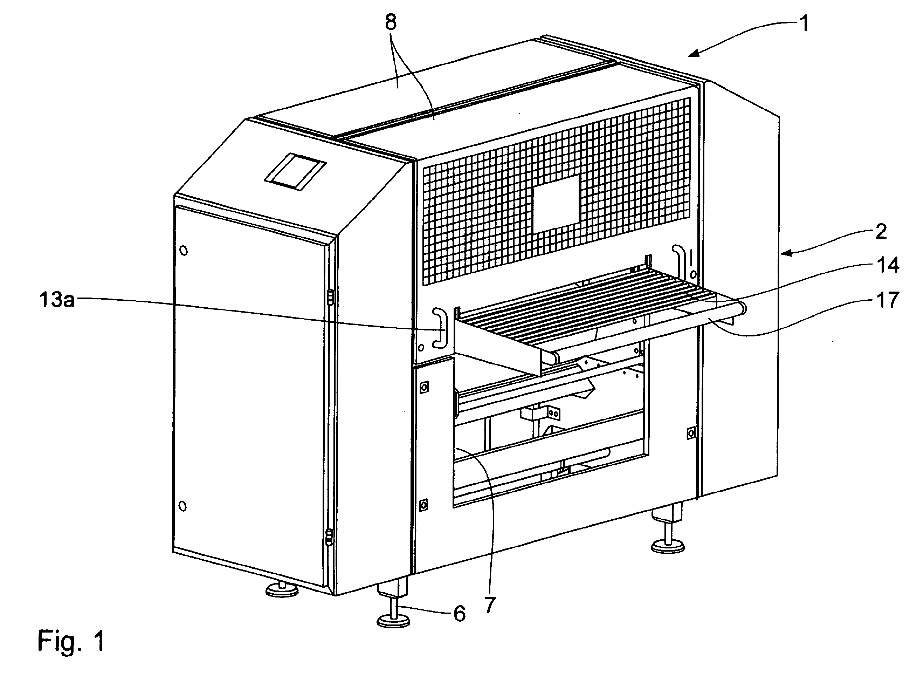

Eine in Fig. 1 gezeigte Teigband-Herstellungsvorrichtung 1 dient zur Herstellung eines homogenen und eine relativ geringe Bandstärke aufweisenden Teigbandes aus einem stärkeren Roh-Teigband. Eine derartige Vorrichtung 1 wird auch als Satelliten-Walzanlage bezeichnet.

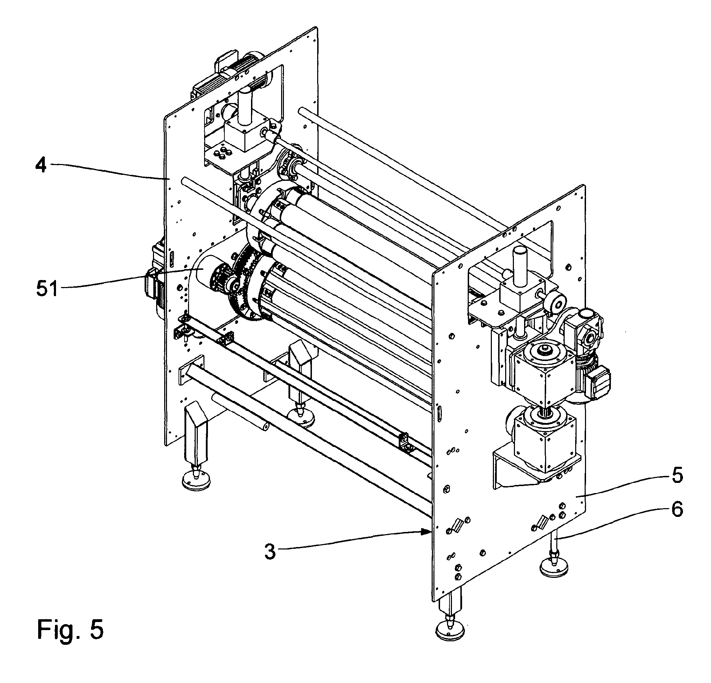

Die Vorrichtung 1 hat ein Gehäuse 2, in dem die Komponenten der Vorrichtung 1 zusammen mit ihren Antrieben untergebracht sind. Ein Gehäuserahmen 3 (vgl. Fig. 5) stützt sich über vertikale Rahmen-Seitenplatten 4, 5 über Stützfüße 6 am Boden ab. Das Roh-Teigband läuft über eine dem Betrachter der Fig. 1 zugewandte Einlauföffnung 7 in einen Bearbeitungsbereich der Vorrichtung 1 ein und über eine gegenüberliegende Auslauföffnung als fertig bearbeitetes Teigband wieder aus dem Gehäuse 2 heraus. Einlauf- und auslaufseitig hat die Vorrichtung 1 jeweils eine Zugangstür 8. Die beiden Zugangstüren 8 sind gleich aufgebaut, weswegen es ausreicht, nachfolgend nur die einlaufseitige Zugangstür 8 zu beschreiben. Diese hat einen Revisionsabschnitt 9, der über ein Revisions-Schwenkgelenk 10 beiderseits mit den Rahmen-Seitenplatten 4, 5 des Gehäuserahmens 3 verbunden ist. Der Revisionsabschnitt 9 ist im Querschnitt L-förmig und hat einen Gehäuse-Dachabschnitt 11 und einen um 90° abgewinkelt sich hieran anschließenden Gehäuse-Stirnwandabschnitt 12. Der Gehäuse-Stirnwandabschnitt 12 ist bereichsweise als Gitter ausgeführt, so dass durch diesen Abschnitt der Zugangstür 8 ein Blick ins Innere der Vorrichtung 1 möglich ist.

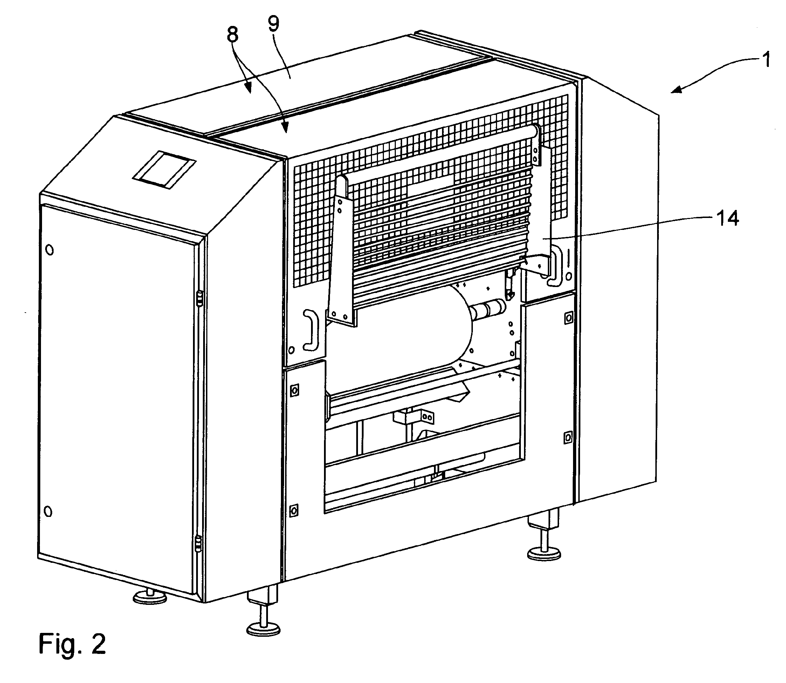

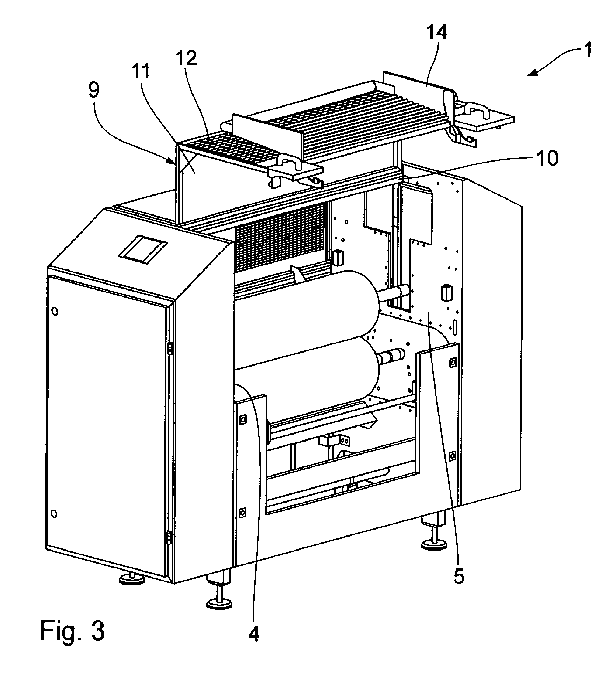

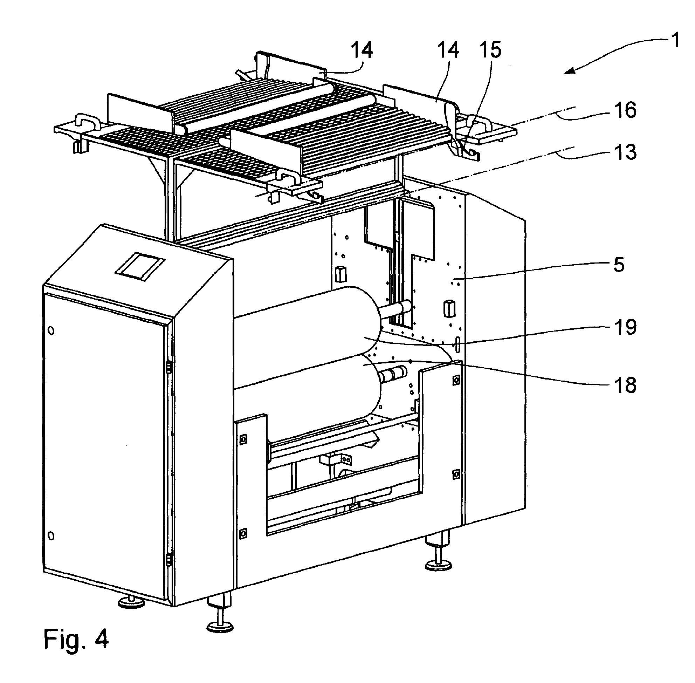

Der Revisionsabschnitt 9 kann durch Schwenken um das Revisions-Schwenkelement 10 um eine Schwenkachse 13 zwischen einer in den Fig. 1 und 2 dargestellten Betriebsposition und einer aufgeschwenkten und in den Fig. 3 und 4 dargestellten Revisionsposition verschwenkt werden. In der Betriebsposition des Revisionsabschnitts 9 ist allenfalls ein eingeschränkter Zugang zu inneren Komponenten der Vorrichtung 1 möglich. In der Revisionsposition des Revisionsabschnitts 9 ist ein nahezu ungehinderter Zugang zu den inneren Komponenten der Vorrichtung 1, z. B. zu Reinigungs-, Wartungs-, Einstell- oder Montagezwecken möglich. Zum Schwenken kann der Revisionsabschnitt 9 an Handgriffen 13a ergriffen werden.

Ein Abdeckabschnitt 14 ist über ein Abdeck-Schwenkgelenk 15 mit dem Gehäuse-Stirnwandabschnitt 12 im Bereich der Öffnung 7 für den Teigein- bzw. Auslauf verbunden.

Der Abdeckabschnitt 14 ist hauptsächlich ebenfalls als Metallgitter ausgeführt, so dass durch den Abdeckabschnitt 14 hindurch ein Blick ins Innere der Vorrichtung 1 möglich ist. Der Abdeckabschnitt 14 kann um eine Schwenkachse 16 des Abdeck-Schwenkgelenks 15, die parallel zur Schwenkachse 13 und zu dieser beabstandet verläuft, zwischen einer in der Fig. 1 dargestellten Abdeck- bzw. Betriebsposition und einer in den Fig. 2 bis 4 dargestellten Zugangsposition verschwenkt werden. In der Abdeckposition steht der Abdeckabschnitt 14 in einer 90°-Anordnung über die Stirnwand des Gehäuses 2 über und deckt einen dem Gehäuse 2 benachbarten Bereich einer Einlauf- bzw. Auslaufförderrichtung für Teig ab, mittels der einerseits das Roh-Teigband der Vorrichtung 1 zugeführt und mittels der andererseits das fertig bearbeitete Teigband von der Vorrichtung 1 abgeführt wird. In der um 90° nach oben verschwenkten Zugangsposition gibt der Abdeckabschnitt 14 die Einlauföffnung 7 bzw. die Auslauföffnung frei, so dass den Öffnungen benachbarte Komponenten für bestimmte Kontrollzwecke zugänglich sind. Zur Kontrolle innerer Komponenten des Gehäuses 2 ist es also nicht erforderlich, den gesamten Revisionsabschnitt 9 aufzuschwenken, sondern es reicht aus, den leichteren Abdeckabschnitt 14 aufzuschwenken. Hierzu wird der Abdeckabschnitt 14 über eine Griffleiste 17 ergriffen. In der Zugangsposition ist der Abdeckabschnitt 14 z. B. über einen nicht dargestellten Sicherungshebel oder eine unter Vorspannung stehende und manuell lösbare Sicherungsklinke arretiert, so dass sicher verhindert ist, dass der Abdeckabschnitt 14 unerwünscht aus der Zugangsposition in die Abdeckposition zurückfällt.

Die beiden Zugangstüren 8 haben dachseitig eng benachbarte Revisions-Schwenkgelenke 10, so dass auch die Revisions-Schwenkachsen 13 nahe benachbart sind. Sobald beide Zugangstüren 8 in die Revisionsposition aufgeschwenkt sind, ist das Innere der Vorrichtung 1 praktisch ungehindert zugänglich. Mit beiden Zugangstüren 8 in der Revisionsposition erinnert das Gehäuse 2 an eine Kraftfahrzeugkarosserie mit Flügeltüren.

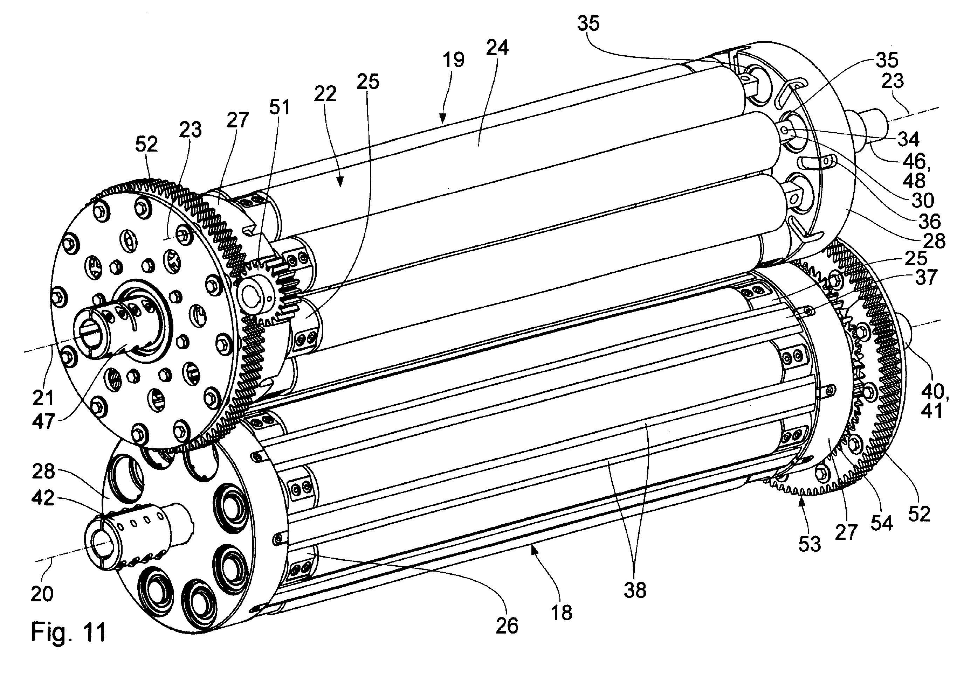

Zur Bearbeitung des Teigbandes hat die Vorrichtung 1 ein Druckmodul mit einer Unter-Drückeinrichtung 18 und einer Ober-Drückeinrichtung 19. Die Drückeinrichtungen 18, 19 sind in den Fig. 1 bis 4 schematisch dargestellt. Im Detail sind die Drückeinrichtungen 18, 19 insbesondere in der Fig. 11 gezeigt, wobei einzelne Teile insbesondere der Ober-Drückeinrichtung 19 in der Fig. 11 weggelassen sind.

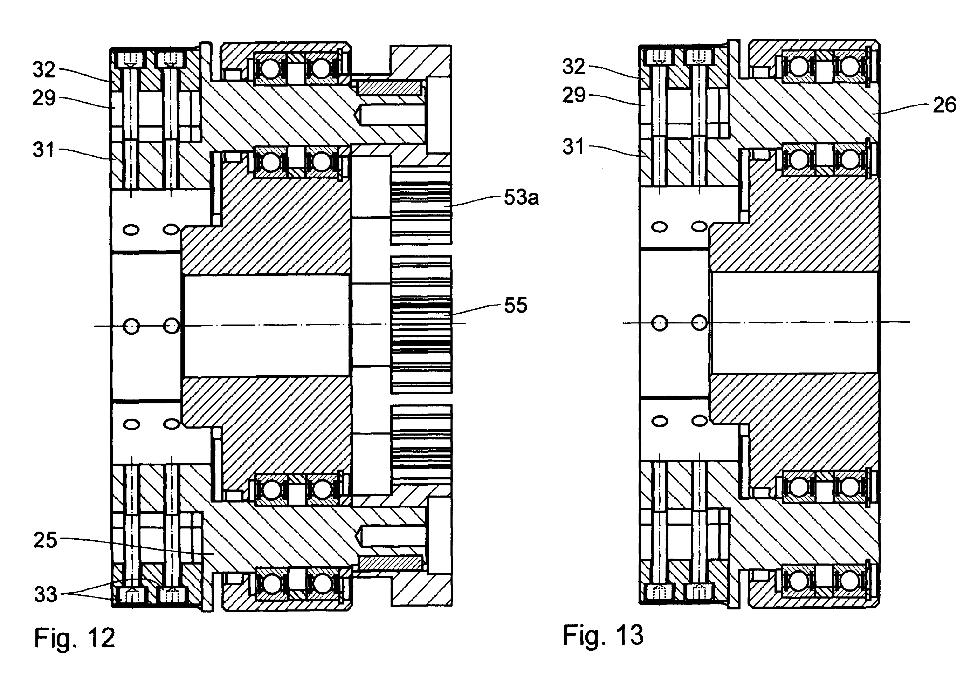

Jede Drückeinrichtung 18, 19 hat eine zylindrische Außenkontur und ist um eine mit der Zylinderachse dieser Außenkontur zusammenfallende Rotationsachse 20, 21 angetrieben drehbar. Jede Drückeinrichtung 18, 19 hat eine Mehrzahl, im vorliegenden Beispiel acht, von Planetenwalzen 22. Jede Planetenwalze 22 ist um ihre Längsachse 23 angetrieben drehbar. Die Längsachsen 23 verlaufen parallel zu den Rotationsachsen 20, 21 der zugeordneten Drückeinrichtung 18, 19 und sind zu dieser gleich beabstandet und in Umfangsrichtung gleich verteilt. Die Rotationsachsen 20, 21 stellen jeweils eine zentrale Hauptachse der Drückeinrichtungen 18, 19 dar.
Jede Planetenwalze 22 hat ein mit dem Teigband in Kontakt kommendes Mittelteil 24 und endseitig hiermit lösbar und drehfest verbundene Wellenstummel 25, 26. Jede Planetenwalze 22 hat dabei einen Wellenstummel 25 vom angetriebenen Typ, der in der Fig. 12 dargestellt ist, und einen Wellenstummel 26 vom nicht angetriebenen Typ, der in der Fig. 13 dargestellt ist. Die Wellenstummel 25, 26 sind axial und radial an stirnseitigen Kopfplatten 27, 28 der Drückeinrichtungen 18, 19 gelagert. Die in der Fig. 11 rechte Kopfplatte 27 der Unter-Drückeinrichtung 18 und die in der Fig. 11 links dargestellte Kopfplatte 27 der Ober-Drückeinrichtung sind Kopfplatten vom angetriebenen Typ. Die in der Fig. 11 links dargestellte Kopfplatte 28 der Unter-Drückeinrichtung 18 und die in der Fig. 11 rechts dargestellte Kopfplatte 28 der Ober-Drückeinrichtung 19 sind Kopfplatten vom nicht angetriebenen Typ.

Aufnahmen 29 der Wellenstummel 25, 26 dienen zur drehfesten Aufnahme von Vierkant-Enden 30 der Planetenwalzen 22. Die Aufnahmen 29 sind zweiteilig. Ein stationäres Aufnahmeteil 31 ist einstückig mit dem jeweils zugeordneten Wellenstummel 25, 26 verbunden. Ein lösbares Aufnahmeteil 32 ist über jeweils zwei Schrauben 33 mit Innensechskant-Senkköpfen mit dem stationären Aufnahmeteil 31 verschraubt. Die Schrauben 33 durchdringen bei montiertem Mittelteil 24 Durchgangsbohrungen 34 in den Enden 30. Die Aufnahmen 29 sind jeweils zwischen den Aufnahmeteilen 31, 32 gebildet. In einer entsprechenden Drehposition der Planetenwalzen 22, die in der Fig. 11 dargestellt ist, sind alle Innensechskant-Köpfe der Schrauben 33 von außen zugänglich. Nach Lösen der Schrauben 33 und Abnehmen der lösbaren Aufnahmeteile 32 kann die zugehörige Planetenwalze 22 quer zu ihrer Längsachse 23 von den stationären Aufnahmeteilen 31 abgenommen werden, so dass die Planetenwalze 22 gereinigt oder ausgetauscht werden kann.
In Umfangsrichtung zwischen benachbarten Lageraufnahmen 35 der Kopfplatten 27, 28 sind Montageaufnahmen 36 in den Kopfplatten 27, 28 für weitere, mit dem Teig in Kontakt bringbare Komponenten vorgesehen. In der Fig. 11 sind als Beispiel für derartige Komponenten Abstreiferleisten 37 dargestellt, die Teigreste von den Mantelflächen der Planetenwalzen 22 abstreifen. Die Abstreiferleisten 37 haben den innen benachbarten Planetenwalzen 22 zugewandte Abstreiferschneiden 38, die mit geringem Abstand zu den Mantelflächen angeordnet sind. Anstelle von Abstreiferleisten können in den Montageaufnahmen 36 auch leerlaufende Abstreiferrollen montiert sein, die durch Rollkontakt mit den benachbarten Planetenwalzen 22 auf den dortigen Mantelflächen vorliegende Teigreste abstreifen. Die Abstreiferleisten oder Abstreiferrollen können zudem ein Einsacken weicher Teige verhindern.

Zum Drehantrieb aller Planetenwalzen 22 der Drückeinrichtungen 18, 19 gemeinsam um die Hauptachsen 20, 21 dient ein Haupt-Antriebsmotor 39, der an der Rahmen-Seitenplatte 4 montiert ist. Der Haupt-Antriebsmotor 39 treibt über ein 90°-Umlenkgetriebe 39a einen drehfest mit der angetriebenen Kopfplatte 27 der Unter-Drückeinrichtung 18 verbundenen Wellenstummel 40 an. Der Wellenstummel 40 ist Bestandteil einer längs der Rotationsachse 20 verlaufenden unteren Hauptwelle 41. Letztere endet gegenüberliegend zum Wellenstummel 40 in einem drehfest mit der Kopfplatte 28 der Unter-Drückeinrichtung 18 verbundenen zweiten Wellenstummel 42. Die Hauptwelle 41 der Unter-Drückeinrichtung 18 treibt über ein weiteres 90°-Umlenkgetriebe 43, das an der Seitenplatte 5 montiert ist, eine kurze Übertragungswelle 44 an. Die Übertragungswelle 44 treibt über ein weiteres 90°-Umlenkgetriebe 45, welches ebenfalls an der Seitenplatte 5 montiert ist, eine Hauptwelle 46 der Ober-Drückeinrichtung 19 an, die wie die Hauptwelle 41 der Unter-Drückeinrichtung 18 zwei Wellenstummel 47, 48 aufweist. Der vom 90°-Umlenkgetriebe 45 entfernte Wellenstummel 48 ist drehbar in der Rahmen-Seitenplatte 4 gelagert.

Zum Drehantrieb der Planetenwalzen 22 der Unter-Drückeinrichtung 18 dient ein unterer Walzen-Antriebsmotor 49, der an der Rahmen-Seitenplatte 4 montiert ist. Der Walzen-Antriebsmotor 49 treibt über ein 90°-Umlenkgetriebe 50 ein um eine Achse parallel zu den Rotationsachsen 20, 21 rotierendes Antriebsritzel 51 an. Letzteres greift ein in einen Außenzahnkranz 52 eines Planetengetriebes 53, welches an der angetriebenen Kopfplatte 27 montiert ist. Über Planetenräder 53a, die zwischen einem dem Außenzahnkranz 52 gegenüberliegenden Innenzahnkranz 54 und einem inneren Zahnrad 55 laufen, und die drehfest mit den angetriebene Wellenstummeln 25 verbunden sind, werden über das Planetengetriebe 53 die Planetenwalzen 22 der Unter-Drückeinrichtung 18 drehangetrieben.

In entsprechender Weise treibt ein weiterer Walzen-Antriebsmotor 56, der an der Rahmen-Seitenplatte 5 montiert ist, die Planetenwalzen 22 der Ober-Drückeinrichtung 19 an. Komponenten des Antriebs der Planetenwalzen 22 der Ober-Drückeinrichtung 19, die denjenigen des Antriebs der Planetenwalzen 22 der Unter-Drückeinrichtung 18 entsprechen, tragen daher die gleichen Bezugszeichen und werden nicht nochmals im Einzelnen erläutert.

Zur Vorgabe der Weite eines Zwischenraums 57 der Vorrichtung 1, durch den das zu bearbeitende Teigband hindurchtritt, dient ein Hubantrieb mit einem Hub-Antriebsmotor 58, der an der Rahmen-Seitenplatte 4 montiert ist. Der Hub-Antriebsmotor 58 treibt Hub-Führungselemente in Form von vertikalen Hubführungsstangen 59 an, die mit den Wellenstummeln 47, 48 der Ober-Drückeinrichtung 19 verbunden sind. Die der Rahmen-Seitenplatte 5 zugeordnete Hubführungsstange 59 ist fest mit dem 90°-Umlenkgetriebe 45 und mit dem Walzen-Antriebsmotor 56 verbunden, die ihrerseits in vertikaler Richtung relativ zur Rahmen-Seitenplatte 5 verlagerbar sind. Damit das 90°-Umlenkgetriebe 45 in jeder Hubstellung mit der Übertragungswelle 44 in Eingriff bleibt, ist die Übertragungswelle 44 als das 90°-Umlenkgetriebe 45 vollständig durchtretende, längsverzahnte Welle ausgeführt. Das 90°-Umlenkgetriebe 45 kann längs der Längsachse der Übertragungswelle 44 bei der Hubverstellung der Ober-Drückeinrichtung 19 zur Anpassung des Zwischenraums 57 verschoben werden.

Der Hub-Antriebsmotor 58 hat eine derart hohe Antriebsgeschwindigkeit, dass, ausgehend von einem maximal großen Zwischenraum 57 ein minimaler Zwischenraum 57 zwischen den Drückeinrichtungen 18, 19 innerhalb eines Zeitraums von weniger als fünf Minuten angefahren werden kann. Bei einer bevorzugten Ausführung des Hub-Antriebsmotors 58 kann ein Wechsel zwischen dem maximalen und dem minimalen Zwischenraum 57 sogar innerhalb einer Minute erfolgen.

Die Vorrichtung 1 kann ein Set aus einer Mehrzahl von Planetenwalzen 22 aufweisen. Zu diesem Set können mindestens zwei Planetenwalzen 22 gehören, die sich in Dimensions- oder Materialparametern unterscheiden. Die Planetenwalzen 22 können sich insbesondere in der äußeren Kontur und im Material einer äußeren Teigbearbeitungs-Mantelfläche unterscheiden. Es können beispielsweise Kunststoffwalzen, Edelstahlwalzen, Teflonwalzen sowie Walzen mit glatter, gerändelter, anderweitig perforierter oder veredelter Oberfläche im Austausch eingesetzt werden. Die Walzen können in der Kontur auch ballig oder wellig oder im Quer- oder Längsschnitt mehr- bzw. vieleckig ausgeführt sein, um dem Teigband eine spezielle Form zu geben.

## Patentansprüche

1. Vorrichtung (1) zur Herstellung eines Teigbandes aus einem Roh-Teigband
- mit einer Unter-Drückeinrichtung (18) und einer Ober-Drückeinrichtung (19) mit einem zwischenliegenden Bearbeitungszwischenraum (57) für das Teigband,
- wobei die Drückeinrichtungen (18, 19) jeweils aufweisen
-- eine Mehrzahl von um ihre Längsachsen (23) jeweils drehantreibbaren Planetenwalzen (22),
-- die in Umfangsrichtung um eine gemeinsame zentrale Hauptachse (20, 21), die parallel zu den Planeten-Längsachsen (23) verläuft, gleich verteilt angeordnet sind,
-- wobei die Planetenwalzen (22) um die Hauptachse (20, 21) gemeinsam drehantreibbar sind,
**dadurch gekennzeichnet, dass** jede Planetenwalze (22) ein mit dem Teigband in Kontakt kommendes Mittelteil (24) und endseitig hiermit lösbar und drehfest verbundene und axial und radial an stirnseitigen Kopfplatten (27, 28) der Drückeinrichtungen (18, 19) gelagerte Wellenstummel (25, 26) aufweist.

2. Vorrichtung nach Anspruch 1, **dadurch gekennzeichnet, dass** Aufnahmen (29) der Wellenstummel (25, 26) zur drehfesten Aufnahme von Enden (30) des Mittelteils (24) derart mehrteilig sind, dass nach Lösen eines Aufnahmeteils (32) die zugehörige Planetenwalze (22) quer zu ihrer Längsachse (23) von der restlichen Drückeinrichtung (18, 19) abnehmbar ist.

3. Vorrichtung nach Anspruch 2, **gekennzeichnet durch** jeweils zweiteilige (31, 32) Aufnahmen (29).

4. Vorrichtung nach Anspruch 2 oder 3, **dadurch gekennzeichnet, dass** die stirnseitigen Kopfplatten (27, 28) in Umfangsrichtung zwischen benachbarten Lageraufnahmen (25) für die Planetenwalzen (22) jeweils Montageaufnahmen (36) für weitere, mit dem Teig in Kontakt bringbare Komponenten (37) aufweist.

5. Vorrichtung nach Anspruch 4, **gekennzeichnet durch** Abstreiferleisten (37) als weitere mit dem Teig in Kontakt bringbare Komponenten.

6. Vorrichtung nach einem der Ansprüche 1 bis 5, **dadurch gekennzeichnet, dass** ein Hauptantrieb zum Drehantrieb der Planetenwalzen (22) gemeinsam um die Hauptachse (20, 21) aufweist:
- einen Haupt-Antriebsmotor (39), der
-- über ein erstes Umlenkgetriebe (39a) eine koaxial zur Hauptachse (20) verlaufende Hauptwelle (41) der ersten Drückeinrichtung (18)
-- über die Hauptwelle (41) der ersten Drückeinrichtung (18) und ein zweites Umlenkgetriebe (43 bis 45) eine koaxial zur Hauptachse (21) verlaufende Hauptwelle (46) der zweiten Drückeinrichtung (19)
antreibt.

7. Vorrichtung nach einem der Ansprüche 1 bis 6, **gekennzeichnet durch** einen Hubantrieb (58) zur Vorgabe einer Weite des Zwischenraums (57), wobei der Hubantrieb (58) so ausgelegt ist, dass ausgehend von einem maximal großen Zwischenraum (57) ein minimaler Zwischenraum (57) innerhalb eines Zeitraums von weniger als fünf Minuten, bevorzugt innerhalb einer Minute, angefahren werden kann.

8. Vorrichtung nach einem der Ansprüche 1 bis 7, **gekennzeichnet durch** ein Gehäuse (2) mit einer einlaufseitigen Zugangstür (8) und einer auslaufseitigen Zugangstür (8), wobei mindestens eine der beiden Zugangstüren (8) umfasst:
- einen Revisionsabschnitt (9), der über ein Revisions-Schwenkgelenk (10) mit einem Gehäuserahmen (3) verbunden ist,
- einen Abdeckabschnitt (14) zum Abdecken eines dem Gehäuse (2) benachbarten Bereichs einer Einlauf- bzw. Auslauffördereinrichtung für Teig, der über ein Abdeck-Schwenkgelenk (15) mit dem Revisionsabschnitt (9) verbunden ist.

9. Vorrichtung nach Anspruch 8, **dadurch gekennzeichnet, dass** sowohl einlauf- als auch auslaufseitig eine Zugangstür (8) nach Anspruch 8 vorgesehen ist.

10. Vorrichtung nach Anspruch 9, **dadurch gekennzeichnet, dass** die beiden Zugangstüren (8) auf der Oberseite des Gehäuses (2) benachbarte Revisions-Schwenkgelenke (10) aufweisen.

11. Vorrichtung nach einem der Ansprüche 8 bis 10, **dadurch gekennzeichnet, dass** der Abdeckabschnitt (14) bei stationärem Revisionsabschnitt (9) zwischen der abdeckenden Abdeck- bzw. Betriebsposition und einer angehobenen Zugangsposition verschwenkbar ist, wobei der Abdeckabschnitt (14) in der Zugangsposition arretierbar ist.

12. Set aus Planetenwalzen (22) zum Einsatz in einer Vorrichtung (1) nach einem der Ansprüche 1 bis 11,
- mit mindestens zwei Planetenwalzen (22), die sich in Dimensions- oder Materialparametern unterscheiden.

13. Set nach Anspruch 12, mit mindestens zwei Planetenwalzen (22), die sich in einer äußeren Kontur unterscheiden.

14. Set nach Anspruch 12 oder 13, mit mindestens zwei Planetenwalzen (22), die sich im Material einer äußeren Teigbearbeitungs-Mantelfläche unterscheiden.
